# FASCICULE DE BREVET EUROPEEN

(11) **EP 0 698 194 B1**
(45) Date de publication et mention de la délivrance du brevet: **10.12.1997**
(21) Numéro de dépôt: 94911987.9
(22) Date de dépôt: 28.03.1994
(51) Int. Cl.: F16L 41/08, F16L 39/00

(54) **ENSEMBLE DE FIXATION POUR UN TUBE ET SON PROCEDE DE FABRICATION**
BEFESTIGUNGSEINHEIT FÜR EIN ROHR UND EIN VERFAHREN ZU DEREN HERSTELLUNG
TUBE ATTACHMENT ASSEMBLY AND METHOD OF ITS MANUFACTURE

(30) Priorité: 27.04.1993 FR 9304972
(43) Date de publication de la demande: 28.02.1996
(73) Titulaire: MANULI AUTOMOBILE FRANCE, F-28000 Chartres (FR)
(72) Inventeur: BARON, Daniel, F-28630 Fontenay-sur-Eure (FR); DEPAUW, Jean-Luc, F-28700 Francourville (FR)
(74) Mandataire: Benech, Frédéric
(86) Numéro de dépôt international: FR9400344
(87) Numéro de publication internationale: WO9425788

(56) Documents cités:
- EP-A- 0 067 246
- EP-A- 0 481 871
- FR-A- 2 185 043
- FR-A- 2 649 469
- FR-A- 2 665 238
- US-A- 4 142 843
- US-A- 4 770 447
- US-A- 4 832 377

## Description

La présente invention concerne un ensemble formé d'une plaque connectée à un tube pour fixation du tube sur une pièce munie d'une ouverture propre à recevoir une extrémité dudit tube, et un bloc tube/pièce ainsi obtenu.

L'ensemble plaque/tube est du type comprenant une plaque percée de part en part par au moins un alésage cylindrique, et au moins un tube métallique muni d'une portion d'extrémité cylindrique insérée dans l'alésage de la plaque qu'elle traverse de part en part pour présenter une partie en saillie par rapport à la plaque du côté de son extrémité de jonction avec la pièce.

Le tube est bloqué longitudinalement dans l'alésage par des saillies annulaires externes formant butée de part et d'autre de la plaque, et obtenues par emboutissage du tube.

L'invention trouve une application particulièrement importante, bien que non exclusive, dans le domaine de la fixation de tubes sur un détendeur, notamment pour circuit de climatisation de véhicule automobile.

On connaît déjà des ensembles formés d'une plaque de serrage connectée à des tubes métalliques, pour fixation desdits tubes sur un détendeur de circuit de climatisation.

Les tubes sont rendus solidaires de la plaque de fixation par brasage, par exemple au cuivre, la plaque étant ensuite vissée sur une face plate du détendeur.

Une telle disposition interdit pratiquement l'utilisation de tubes en alliage d'aluminium, dont le brasage est difficile à réaliser.

Le brasage est de plus une opération relativement coûteuse qui entraîne une dégradation des caractéristiques physiques des métaux du fait du chauffage.

On connaît également (US-A-4.142.843) un ensemble plaque/tube du type décrit ci-dessus, appliqué à la fixation de tubes sur un bloc compresseur.

Un tel ensemble présente un encastrement de la saillie annulaire située du côté de l'extrémité de jonction avec le compresseur, dans la plaque de fixation. Il est en effet nécessaire de visser cette plaque contre la face externe de jonction avec le bloc compresseur, métal contre métal, pour obtenir une bonne étanchéité.

Si un tel ensemble permet donc d'éviter les inconvénients du brasage, il nécessite cependant un usinage compliqué de la plaque, avec encastrement d'un joint de façon interne à la plaque et un épaulement conique comme butée externe du tube sur la plaque, de l'autre côté de la plaque par rapport au compresseur.

La présente invention vise à fournir un ensemble plaque/tube, et un bloc pièce/tube obtenu avec un tel ensemble, répondant mieux que ceux antérieurement connus aux exigences de la pratique, notamment en ce qu'elle permet l'assemblage de tubes sur une plaque de serrage sans réaliser de brasage, ce qui permet notamment d'utiliser des métaux différents pour la plaque et les tubes, en ce qu'elle autorise un montage simple, aisé à mettre en oeuvre, pour un coût faible, grâce notamment à l'utilisation de tube en alliage d'aluminium, et en ce qu'elle permet, dans certains cas, d'utiliser la même plaque pour deux types de pièces différentes.

Dans ce but, l'invention propose notamment un ensemble plaque/tube, pour fixation d'au moins un tube sur une pièce munie d'une ouverture cylindrique propre à recevoir une extrémité dudit tube, comprenant :
- une plaque percée de part en part par au moins un alésage cylindrique et comportant des moyens de fixation de la plaque sur une face de la pièce, lesdits moyens étant agencés pour rendre l'alésage coaxial à ladite ouverture cylindrique,
- au moins un tube métallique muni d'une portion d'extrémité cylindrique insérée dans l'alésage de la plaque qu'elle traverse de part en part pour présenter une partie en saillie par rapport à la plaque se terminant par ladite extrémité de tube apte à coopérer avec l'ouverture cylindrique de la pièce,
le tube étant bloqué longitudinalement dans l'alésage par des saillies annulaires externes formant butée de part et d'autre de la plaque, obtenues par emboutissage du tube,
caractérisé en ce que le tube est en alliage d'aluminium,
en ce que les saillies annulaires externes du tube sont entièrement à l'extérieur de ladite plaque,
et en ce qu'il comporte un joint d'étanchéité annulaire en matériau élastomère, enfilé sur l'embout terminal de la portion d'extrémité du tube de l'autre côté de la saillie annulaire par rapport à la plaque et propre à être comprimé entre la saillie annulaire et la face externe de la pièce lors du serrage.

Une telle disposition pouvait a priori sembler inefficace pour résoudre le problème de la fixation étanche de tubes par plaque de serrage sur une pièce du type détendeur. En effet, le fait d'avoir les pliures de tubes a l'extérieur de la plaque entraîne une impossibilité de serrage entre la face externe de la pièce qui est standard et la face de jonction de la plaque, métal contre métal, sur une surface suffisante.

En fait, l'utilisation d'alliages à base d'aluminium, qui se déforme plastiquement, permet d'obtenir une connexion étanche répondant aux normes a'étanchéité en vigueur, sans contact ou quasiment sans contact métal contre métal, pour peu, bien entendu, qu'un joint du type joint torique soit prévu.

Dans des modes de réalisation avantageux, on a de plus recours à l'une et/ou à l'autre des dispositions suivantes :
- la plaque comporte deux alésages cylindriques de diamètres différents et deux tubes respectivement insérés dans lesdits alésages.

La différence de diamètre entre tubes entraînant une différence d'épaisseur entre saillies annulaires obtenues par le pliage du métal lors de l'emboutissage, la fixation de deux tubes sur une même plaque par emboutissage avec des saillies entièrement situées à l'extérieur de la plaque du côté de la pièce, pouvait sembler exclue ou trop compliquée à réaliser.

En fait, les inventeurs ont obtenu une bonne planéité des faces externes des saillies annulaires des deux tubes en concevant une machine spécifique utilisant un seul vérin pour l'emboutissage simultané des tubes ;
- un tube est dans un matériau différent d'un alliage d'aluminium, moins ductil, par exemple en acier ;
- l'alésage cylindrique comporte au moins quatre rainures dans le sens axial réparties régulièrement radialement.

Une telle disposition permet de bloquer la rotation des tubes par rapport à la plaque et assure l'indexage, c'est-à-dire le positionnement relatif dans l'espace, des tubes par rapport à la plaque ;
- les rainures sont situées sur les bords périphériques de l'alésage, de part et d'autre de l'alésage ;
- la plaque présente une face plate d'un côté et, de l'autre côté une face comportant des bossages au droit des alésages, augmentant l'épaisseur de la plaque au niveau desdits alésages par rapport au reste de ladite autre face.

Il est ainsi possible d'utiliser la même plaque pour deux pièces différentes.

L'invention propose également un bloc comprenant un ensemble plaque/tube et une pièce, caractérisé en ce que lesdites ouvertures cylindriques de la pièce débouchent sur une face externe de ladite pièce, en ce que les moyens de fixation de la plaque sur la face externe de la pièce sont agencés pour serrer ladite plaque vers ladite face externe, et en ce que ladite face externe est située à distance de la face de la plaque en vis-à-vis, dirigée vers la pièce.

Dans des modes de réalisation avantageux, l'ensemble plaque/tube du bloc pièce/tube présente l'une et/ou l'autre des caractéristiques décrites ci-dessus.

Avantageusement, l'ouverture cylindrique de la pièce comporte un évidement périphérique propre à loger au moins en partie le joint d'étanchéité annulaire.

L'invention propose également un procédé de fixation de tubes sur une plaque , pour obtenir un ensemble plaque/tube tel que decrit ci-dessus, tel que défini dans la revendication 11.

L'invention sera mieux comprise à la lecture de la description qui suit d'un mode particulier de réalisation donné à titre d'exemple non limitatif.

La description se réfère aux dessins qui l'accompagnent dans lesquels :
- La figure 1 est une vue partielle, en partie en coupe, d'un bloc pièce/tube comprenant un ensemble plaque/tube selon le mode de réalisation de l'invention plus particulièrement décrit ici.
- La figure 2 est une vue de dessus de la plaque de la figure 1.
- La figure 3 est une vue en coupe selon III-III de la plaque de la figure 2.
- Les figures 4 et 5 illustrent les étapes principales de fabrication de l'ensemble plaque/tube de la figure 1, ensemble qui est représenté plus précisément en coupe transversale sur la figure 5.

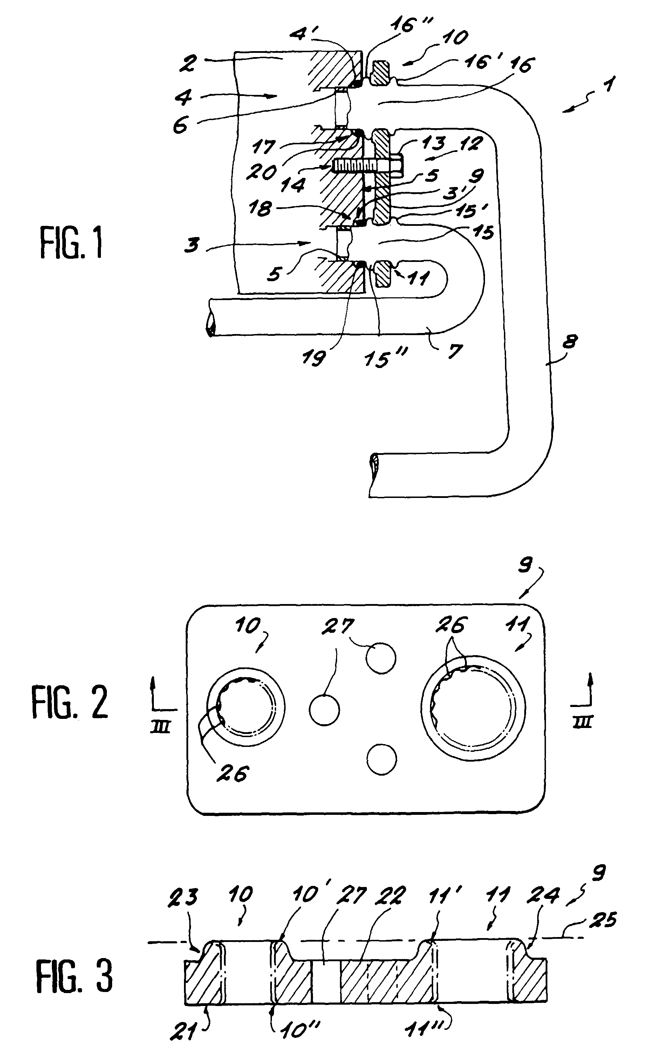

La figure 1 montre un bloc pièce/tube 1 comprenant une pièce 2 par exemple constituée par un détendeur de circuit de climatisation de voiture automobile.

La pièce 2 est munie de deux ouvertures cylindriques 3 et 4 respectivement d'un premier diamètre et d'un second diamètre par exemple 1,5 fois plus grand que le premier diamètre, propres à recevoir et à coopérer a frottement doux avec les extrémités 5 et 6 des tubes 7 et 8, d'alimentation et d'évacuation du fluide du détendeur.

Les orifices 3 et 4 sont terminés à leur périphérie par un évidement 3', 4', par exemple formé par une partie chanfreinée de l'alésage, vers l'extérieur, de portée conique, de quelques millimètres de profondeur, et débouchant sur la face extérieure 5, plate, de la pièce.

Le bloc 1 comprend une plaque 9, par exemple en acier, percée de part en part de deux alésages cylindres 10 et 11, de diamètres différents.

Des moyens de fixation 12, par exemple constitués de plusieurs vis 13, traversant la plaque de part en part et coopérant avec des filetages 14 ménagés dans la pièce 1, sont prévus.

Le bloc comprend les tubes 7 et 8 en alliage d'aluminium, par exemple en alliage 3003 (Normes NFA02104).

Chaque tube est muni d'une portion d'extrémité, respectivement 15 et 16, insérée dans un alésage correspondant 10, 11 de la plaque.

Les portions d'extrémités 15 et 16 traversent la plaque de part en part pour présenter respectivement des parties 17 et 18, en saillie par rapport à la plaque.

Les tubes sont par ailleurs bloqués dans leur alésage respectif par des saillies annulaires externes 15', 15" et 16', 16", dirigées radialement vers l'extérieur des tubes, formant butée de part et d'autre de la plaque, et obtenues par emboutissage des tubes.

Ces saillies annulaires externes sont entièrement à l'extérieur de la plaque 9, c'est-à-dire de part et d'autre des faces externes de ladite plaque.

Le bloc 1 comporte de plus deux joints d'étanchéité annulaires 19 et 20 en matériau élastomère, par exemple constitués en matériau connu sous la dénomination HNBR (initiales anglo-saxonnes de Hydrogened Nytril Butadiene Rubber).

Un tel matériau présente notamment l'avantage de permettre l'utilisation du gaz HCFC₁₃₄A (Tetrafluoroéthane) ou du gaz CFC₁₂=CC₁₂F₂ (Dichlorodifluorométhane), comme fluide de climatisation.

Les deux joints 19 et 20 sont respectivement enfilés sur les embouts terminaux des portions d'extrémité 15 et 16, de l'autre côté de la saillie annulaire 15" et 16" par rapport à la plaque, c'est-à-dire du côté des extrémités 5 et 6.

Ils sont comprimés entre la face externe des saillies annulaires 15" et 16" et les bords périphériques comprenant les parties évidées 3', 4' des orifices 3 et 4, par exemple avec une force de compression de 500 à 1000 daN, de sorte que les faces externes des saillies annulaires 15" et 16" viennent pratiquement en contact avec la face externe 5 de la pièce, les joints s'encastrant entièrement dans lesdites parties évidées, de forme conique.

On va maintenant décrire plus précisément la plaque 9 de fixation en référence aux figures 2 et 3.

Les mêmes numéros de référence que pour la figure 1 sont utilisés pour désigner les mêmes éléments.

La plaque 9 est de forme sensiblement parallélépipédique.

Elle comprend les deux alésages 10 et 11, par exemple de diamètre de l'ordre de 10 mm et de l'ordre de 16 mm, qui traversent chacun ladite plaque de part en part entre une première face plate 21 et une deuxième face 22 comprenant pour chaque alésage un bossage ou collerette cylindrique 23, 24, faisant saillie vers l'extérieur de la plaque et définissant une surface 25 d'appui des faces internes des saillies annulaires des tubes, située à distance de la face 22, par exemple à quelques millimètres.

Chaque alésage cylindrique 10 et 11 comporte à une ou à chacune de ses extrémités 10', 10" et 11', 11" une zone légèrement inclinée vers l'extérieur de l'alésage munie de petites rainures 26 dans le sens axial, par exemple sur une hauteur comprise entre 1 dixième et 1 tiers de la hauteur de l'alésage, ou sur toute sa hauteur.

Ces rainures sont par exemple de section triangulaire, de profondeur comprise entre 0,5 et 1,5 millimètres, disposées radialement régulièrement sur la périphérie et présentant un nombre compris entre 10 et 30.

Elles peuvent être réalisées simplement avec une presse sur la paroi interne de l'alésage, par exemple lors de l'opération de découpage/emboutissage de formation de la plaque.

De telles rainures permettent d'éviter la rotation des tubes par rapport à la plaque.

Elles permettent également l'indexation des tubes dans l'espace par rapport à la plaque, et donc par rapport à la pièce sur laquelle la plaque est fixée sans degré de liberté.

La plaque 9 comprend par ailleurs des orifices 27 de passage des vis 13 de fixation de la plaque 9 sur la pièce 2.

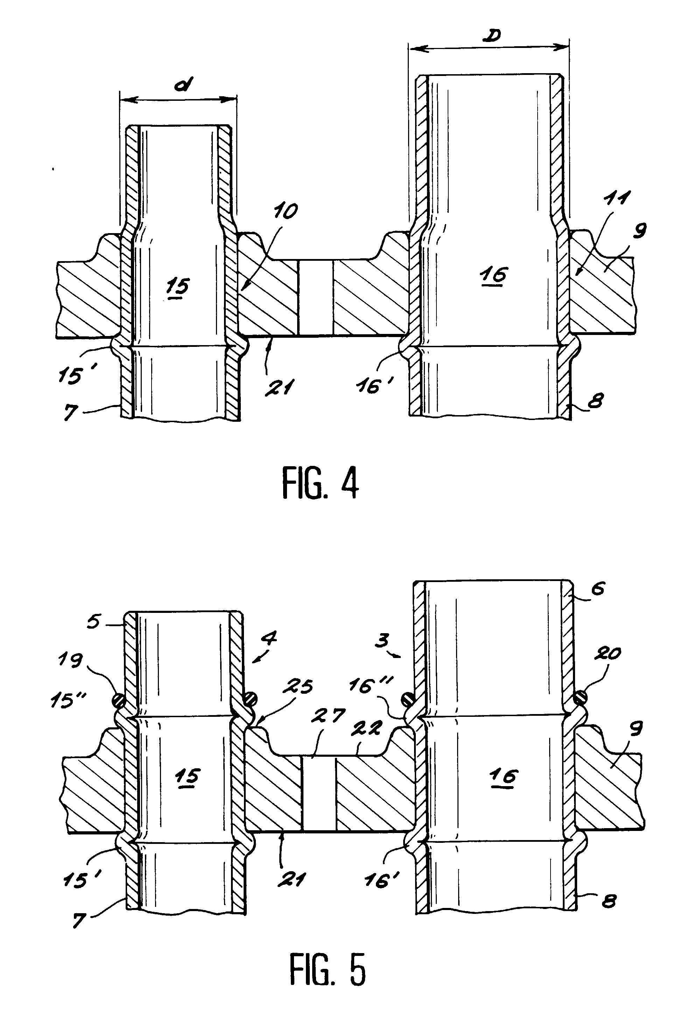

Les figures 4 et 5 illustrent les étapes principales du procédé de fabrication de l'ensemble plaque/tube selon l'invention plus particulièrement décrit ici.

Les mêmes numéros de références désignent les mêmes éléments que pour la figure 1.

On réalise dans un premiers temps sur les tubes 7 et 8 un premier épaulement par emboutissage des tubes, avec une préparation calculée et ajustée des diamètres extérieurs d et D des parties d'extrémités 15 et 16, qui sont ainsi agencées pour coopérer à frottement avec les alésages 10 et 11 de la plaque.

Ces premiers épaulements constituent les saillies annulaires 15' et 16', dirigées vers l'extérieur de la pièce par rapport à la plaque dans le bloc selon l'invention.

On introduit ensuite les alésages 10 et 11 de la plaque 9 sur les portions d'extrémité 15 et 16 en maintenant par un outillage spécifique les tubes 7 et 8 préalablement orientés dans leur position définitive, jusqu'à ce qu'une face de la plaque, par exemple la face plate 21, dénuée de bossage, viennent en butée sur lesdites saillies 15' et 16'.

On emboutit alors à nouveau (cf. figure 5) les portions d'extrémité 3 et 4 des tubes pour constituer les saillies annulaires 15" et 16" par pliage du métal, de façon à venir immobiliser la plaque entre les parties en saillies 15' et 15", d'une part, et 16' et 16", d'autre part, les saillies 15" et 16" venant en appui sur les surfaces respectives des bossages 23 et 24 dans le plan 25.

La déformation des tubes 7 et 8 est calculée de manière à ce que les diamètres d et D augmentent de quelques dixièmes de millimètres lors de l'emboutissage, venant ainsi pénétrer dans les rainures 26 des alésages 10 et 11, qui assurent ainsi le blocage en rotation et l'indexage définitif des tubes par rapport à la plaque.

Les joints 19 et 20 sont ensuite enfilés sur les embouts libres avant montage sur la pièce.

Comme il va de soi, et comme il résulte de ce qui précède, la présente invention n'est pas limitée au mode de réalisation plus particulièrement décrit.

Elle concerne notamment, et par exemple, le cas où l'ensemble ne comporte qu'un seul tube, le cas où les tubes sont de configuration très différente, le cas où il est prévu un collage des portions d'extrémités des tubes dans les alésages par un adhésif fixateur de type connu, pour éviter la rotation entre tube et plaque, le cas où la pièce est une bouteille déshydratante ou un condenseur pour circuit de climatisation de voiture automobile.

## Revendications

1. Ensemble plaque/tube, pour fixation d'au moins un tube (7, 8) sur une pièce (2) munie d'une ouverture cylindrique (3, 4) propre à recevoir une extrémité (5, 6) dudit tube, comprenant:
- une plaque (9) percée de part en part par au moins un alésage cylindrique (10, 11) et comportant des moyens (12) de fixation de la plaque sur une face (5) de la pièce, lesdits moyens étant agencés pour rendre l'alésage coaxial à ladite ouverture cylindrique,
- au moins un tube métallique (7, 8) muni d'une portion d'extrémité cylindrique (15, 16) insérée dans l'alésage de la plaque qu'elle traverse de part en part pour présenter une partie en saillie (17, 18) par rapport à la plaque se terminant par ladite extrémité de tube apte à coopérer avec l'ouverture cylindrique de la pièce,
le tube étant bloqué longitudinalement dans l'alésage par des saillies annulaires externes (15', 15" ; 16', 16") formant butée de part et d'autre de la plaque, obtenues par emboutissage du tube,
caractérisé en ce que le tube (7, 8) est en alliage d'aluminium,
en ce que les saillies annulaires externes (15', 15" ; 16', 16") du tube sont entièrement situées à l'extérieur de ladite plaque,
et en ce qu'il comporte un joint d'étanchéité annulaire (19, 20) en matériau élastomère, enfilé sur l'embout terminal de la portion d'extrémité (15, 16) de l'autre côté de la saillie annulaire (15", 16") par rapport à la plaque et propre à être comprimé entre la saillie annulaire (15", 16") et la face externe (5) de la pièce (2) lors du serrage.

2. Ensemble plaque/tube selon la revendication 1, caractérisé en ce que la plaque comporte deux alésages cylindriques (10, 11) et deux tubes (7, 8) insérés dans lesdits alésages, de diamètres différents.

3. Ensemble selon la revendication 2, caractérisé en ce que l'un des deux tubes métalliques est en un matériau différent d'un alliage d'aluminium.

4. Ensemble selon l'une quelconque des revendications précédentes, caractérisé en ce que l'alésage cylindrique (10, 11) comporte au moins quatre rainures (26) dans le sens axial réparties régulièrement radialement.

5. Ensemble selon la revendication 4, caractérisé en ce que les rainures (26) sont situées sur les bords périphériques (10', 10" 11', 11") de l'alésage, de part et d'autre de l'alésage.

6. Ensemble selon l'une quelconque des revendications précédentes, caractérisé en ce que la plaque (9) présente une face plate (21) et, en ce que l'autre face (22) de la plaque comporte des bossages (23, 24) au droit des alésages, pour augmenter l'épaisseur de ladite plaque, par rapport à ladite autre face.

7. Bloc (1) comprenant un ensemble plaque / tube selon l'une quelconque des revendications précédentes et ladite pièce (2), caractérisé en ce que lesdites ouvertures cylindriques (3, 4) de la pièce (2) débouchent sur une face externe de ladite pièce, en ce que les moyens (12) de fixation de la plaque (9) sur la face externe (5) de la pièce sont agencés pour serrer ladite plaque vers ladite face externe, et en ce que ladite face externe est située à distance de la face (22) de la plaque en vis-à-vis, dirigée vers la pièce.

8. Bloc selon la revendication 7, caractérisé en ce que l'ouverture cylindrique (3, 4) de la pièce comporte une partie évidée (3', 4') périphérique sensiblement conique, propre à loger au moins en partie le joint d'étanchéité annulaire (19, 20).

9. Bloc selon l'une quelconque des revendications 7 et 8, caractérisé en ce que la pièce est un détendeur pour circuit de climatisation de voiture automobile.

10. Bloc selon l'une quelconque des revendications 7 et 8, caractérisé en ce que la pièce est une bouteille déshydratante ou un condenseur pour circuit de climatisation de voiture automobile.

11. Procédé de fabrication d'un ensemble plaque / tube selon l'une quelconque des revendications 1 à 6, caractérisé en ce que
- on réalise un premier épaulement par emboutissage d'au moins un tube (7, 8),
- on introduit ledit tube (7, 8) dans un alésage (10, 11) correspondant de la plaque jusqu'à venir en butée sur ladite plaque,
- on réalise un second épaulement sur ledit tube par emboutissage de façon à immobiliser la plaque entre les deux épaulements dudit tube, et
- on enfile le joint sur l'embout libre du tube avant montage de l'ensemble sur la pièce.

## Patentansprüche

1. Platte-/Rohr-Einheit zur Befestigung von zumindest einem Rohr (7, 8) auf einem Stück (2), das mit einer zylindrischen, zur Aufnahme eines äußeren Endes (5, 6) des Rohres geeigneten Öffnung (3, 4) versehen ist, und die aufweist:
- eine Platte (9), die zumindest an einer Zylinderbohrung (10, 11) völlig durchbohrt ist und die Mittel (12) zur Befestigung der Platte auf einer Oberfläche (5) des Stücks aufweist, wobei die Mittel zum Ermöglichen der koaxialen Bohrung in der zylindrischen Öffnung angeordnet sind,
- zumindest ein metallisches Rohr (7, 8), das mit einem Teil eines äußeren zylindrischen Endes (15, 16) versehen ist, das in der Bohrung der Platte eingefügt ist, die es zum Zeigen eines vorkragenden Teiles (17, 18) hinsichtlich der Platte völlig durchquert, wobei es durch das äußere Ende des Rohres begrenzt wird, geeignet zum Zusammenwirken mit der zylindrischen Öffnung des Stücks, wobei das Rohr in Längsrichtung in der Bohrung durch die ringförmigen äußeren Auskragungen (15', 15"; 16' 16") blockiert wird, die die Begrenzung beider Seiten der Platte bilden, und die durch eine Ausbauchung des Rohres erhalten werden,
**dadurch gekennzeichnet,**
**daß** das Rohr (7, 8) aus einer Aluminiumlegierung besteht, daß die ringförmigen äußeren Auskragungen (15', 15"; 16', 16") des Rohres vollständig am äußeren Ende der Platte positioniert sind, und daß sie eine ringförmige Dichtung (19, 20) aus Elastomermaterial aufweist, die auf einem Endansatzstück des Teils des äußeren Endes (15, 16) der anderen Seite der ringförmigen Auskragung (15". 16") hinsichtlich der Platte, aufgeschoben ist und die geeignet ist. zusamengedrückt zu werden zwischen der ringförmigen Auskragung (15", 16") und der Außenfläche (5) des Stücks (2) beim Festklemmen.

2. Platte-/Rohr-Einheit nach Anspruch 1,
**dadurch gekennzeichnet,**
**daß** die Platte zwei zylindrische Bohrungen (10, 11) und zwei in die Bohrungen eingefügte Rohre (7, 8) von unterschiedlichem Durchmesser aufweist.

3. Einheit nach Anspruch 2,
**dadurch gekennzeichnet,**
**daß** eines der beiden metallischen Rohre aus einem anderen Material als aus einer Aluminiumlegierung besteht.

4. Einheit nach einem der vorstehenden Ansprüche,
**dadurch gekennzeichnet,**
**daß** die zylindrische Bohrung (10, 11) zumindest vier Rillen (26) in axialer Richtung, gleichmäßig radial verteilt aufweist.

5. Einheit nach Anspruch 4
**dadurch gekennzeichnet,**
**daß** die Rillen (26) auf den äußeren umlaufenden Rändern (10', 10"; 11', 11") der Bohrung beiderseits der Bohrung positioniert sind.

6. Einheit nach einem der vorstehenden Ansprüche,
**dadurch gekennzeichnet,**
**daß** die Platte (9) eine flache Oberfläche (21) zeigt und daß die andere Oberfläche (22) der Platte Vorsprünge (23, 24) auf der rechten Seite der Bohrungen zum Erhöhen der Höhe der Platte im Vergleich zu der übrigen Oberfläche aufweist.

7. Block (1) mit einer Platte-/Rohr-Einheit nach einem der vorstehenden Ansprüche und dem Stück (2),
**dadurch gekennzeichnet,**
**daß** die zylindrischen Öffnungen (3, 4) des Stücks (2) auf einer Außenfläche des Stücks (2) münden, daß die Mittel (12) zur Befestigung der Platte (9) auf der Außenfläche (5) des Stücks so angeordnet sind, daß sie die Platte gegen die Außenfläche drücken, und daß die Außenfläche in einem Abstand zu der Oberfläche (22) der Platte gegenüberliegend und hingerichtet zu dem Stück angeordnet ist.

8. Block nach Anspruch 7,
**dadurch gekennzeichnet,**
**daß** die zylindrische Öffnung (3, 4) des Stücks ein ausgehöhltes umlaufend im wesentlichen konisches Teilstück (3', 4') aufweist, das geeignet ist, zumindest teilweise die ringförmige Dichtung (19, 20) aufzunehmen.

9. Block nach einem der Ansprüche 7 oder 8,
**dadurch gekennzeichnet,**
**daß** das Stück ein Druckregler für den Klimatisierungskreislauf eines Automobiles ist.

10. Block nach einem der Ansprüche 7 oder 8,
**dadurch gekennzeichnet,**
**daß** das Stück eine Trockenmittelflasche oder ein Kondensator für den Klimatisierungskreislauf eines Automobiles ist.

11. Verfahren zur Herstellung einer Platte-/Rohr-Einheit nach einem der Ansprüche 1 bis 6,
**dadurch gekennzeichnet,**
**daß**
- eine erste Schulter durch Ausbauchen wenigstens eines Rohres (7, 8) erzeugt wird,
- das Rohr (7, 8) in eine Bohrung (10, 11) eingefügt wird, die mit der Platte korrespondiert, bis es an den Anschlag auf der Platte kommt,
- eine zweite Schulter auf dem Rohr durch Ausbauchen derart realisiert wird, daß die Platte zwischen den beiden Schultern des Rohres unbeweglich eingefügt ist, und
- die Dichtung auf dem freien Ansatzstück des Rohres vor der Befestigung der Einheit auf das Stück aufgesteckt wird.

## Claims

1. Plate/tube assembly for attaching at least one tube (7, 8) to a component (2) provided with a cylindrical opening (3, 4) suitable for receiving one end (5, 6) of the said tube, comprising:
- a plate (9) pierced right through by at least one cylindrical bore (10, 11) and incorporating means (12) for attaching the plate to one face (5) of the component, the said means being positioned so as to make the bore coaxial with the said cylindrical opening,
- at least one metal tube (7, 8) provided with a cylindrical end portion (15, 16) inserted in the bore passing right through the plate so as to present a part (17, 18) projecting from the plate, ending with the said end of the tube, suitable for cooporating with the cylindrical opening in the component,
the tube being locked longitudinally in the bore by external annular projections (15', 15"; 16', 16") forming stops on both sides of the plate, obtained by stamping the tube,
characterised in that the tube (7, 8) is made of an aluminium alloy,
in that the external annular projections (15', 15"; 16', 16") of the tube are located entirely on the outside of the said plate,
and in that it incorporates an annular gasket (19, 20) made of an elastomeric material, threaded over the tip of the end portion (15, 16) on the other side of the annular projection (15", 16") from the plate and suitable for being compressed between the annular projection (15", 16") and the outer face (5) of the component (2) when it is tightened.

2. Plate/tube assembly according to Claim 1, characterised in that the plate incorporates two cylindrical bores (10, 11) and two tubes (7, 8) inserted into the said bores of different diameters.

3. Assembly according to Claim 2, characterised in that one of the two metal tubes is made of a material different from an aluminium alloy.

4. Assembly according to any one of the preceding claims, characterised in that the cylindrical bore (10, 11) incorporates at least four grooves (26) in the axial direction distributed radially in a regular fashion.

5. Assembly according to Claim 4, characterised in that the grooves (26) are located on the peripheral edges (10', 10"; 11', 11") of the bore on both sides of the bore.

6. Assembly according to any one of the preceding claims, characterised in that the plate (9) has one flat face (21) and in that the other face (22) of the plate carries bosses (23, 24) at right angles to the bores in order to increase the thickness of the said plate with respect to the said other face.

7. Block (1) comprising a plate/tube assembly according to any one of the preceding claims and the said component (2), characterised in that the said cylindrical openings (3, 4) in the component (2) open out an to an outer face of the said component,
in that the means (12) for attaching the plate (9) to the outer face (5) of the component are positioned so as to hold the said plate closely to the said outer face, and in that the said outer face is located at a distance from the face (22) of the plate which is opposite and directed towards the component.

8. Block according to Claim 7, characterised in that the cylindrical opening (3, 4) in the component incorporates a peripheral hollowed-out part (3', 4' ), substantially conical, suitable for at least partly housing the annular gasket (19, 20).

9. Block according to either of Claims 7 and 8, characterised in that the component is a pressure-reducing valve for the air-conditioning circuit of a motor vehicle.

10. Block according to either of Claims 7 and 8, characterised in that the component is a drying agent bottle or a condenser for the air-conditioning circuit of a motor vehicle.

11. Method of manufacturing a plate/tube assembly according to any one of Claims 1 to 6, characterised in that
- a first shoulder is made by stamping at least one tube (7, 8),
- the said tube (7, 8) is introduced into a corresponding bore (10, 11) in the plate until it abuts against the said plate,
- a second shoulder is made on the said tube by stamping so as to lock the plate between the two shoulders of the said tube, and
- the gasket is threaded over the free tip of the tube before mounting the assembly on the component.
